(19) Europäisches Patentamt
European Patent Office
Office européen des brevets

(11) Veröffentlichungsnummer: **0 268 898 B1**

(12) # EUROPÄISCHE PATENTSCHRIFT

(45) Veröffentlichungstag der Patentschrift: **31.10.90**

(51) Int. Cl.⁵: **C07F 9/34**

(21) Anmeldenummer: **87116302.8**

(22) Anmeldetag: **05.11.87**

(54) **Verfahren zur Herstellung eines Isomerengemisches bicyclischer Phosphinsäurechloride.**

(30) Priorität: **26.11.86 DE 3640356**

(43) Veröffentlichungstag der Anmeldung: **01.06.88 Patentblatt 88/22**

(45) Bekanntmachung des Hinweises auf die Patenterteilung: **31.10.90 Patentblatt 90/44**

(84) Benannte Vertragsstaaten: **DE FR GB NL**

(56) Entgegenhaltungen:
**EP-A- 0 218 933**
**DE-C- 1 056 606**
**GB-A- 2 127 412**

(73) Patentinhaber: **HOECHST AKTIENGESELLSCHAFT, Postfach 80 03 20, D-6230 Frankfurt am Main 80(DE)**

(72) Erfinder: **Weferling, Norbert, Dr., Schaesbergstrasse 13, D-5030 Hürth(DE)**

EP 0 268 898 B1

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Beschreibung

Verfahren zur Herstellung eines Isomerengemisches neuer bicyclischer Phosphinsäurechloride

Die vorliegende Erfindung bezieht sich auf ein Isomerengemisch neuer bicyclischer Phosphinsäurechloride und betrifft ein Verfahren zu dessen Herstellung.

Es ist bekannt, ein Isomerengemisch, bestehend aus 9-Cl-9-Phosphabicyclo-[3.3.1]-nonan und 9-Cl-9-Phosphabicyclo-[4.2.1]-nonan herzustellen, indem man ein Isomerengemisch von 9-H-phosphabicyclo-[3.3.1]-nonan und -[4.2.1]-nonan mit Hexachlorethan umsetzt (DE-A 13 235 787). Nachdem sich Organohalogenphosphane im allgemeinen durch ihre hohe Reaktivität zahlreiche Anwendungsmöglichkeiten, beispielsweise auf Gebieten des Pflanzen- und Flammschutzes, erschlossen haben, bestand ein technisches Interesse an entsprechenden Oxoverbindungen. Auf der Suche nach solchen genannten Verbindungen wurde ein neues Isomerengemisch, bestehend aus 9-Chlor-9-oxo-9-phosphabicyclo-[3.3.1]-nonan (I) und -[4.2.1]-nonan (II) gefunden, entsprechend den Formeln:

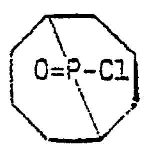

I

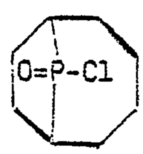

II

Dieses Gemisch erhält man erfindungsgemäß, indem man ein Isomerengemisch, bestehend aus 9-H-9-Phosphabicyclo-[3.3.1]-nonan und -[4.2.1]-nonan, mit Sulfurylchlorid umsetzt.

Vorzugsweise Ausgestaltungen dieses Verfahrens bestehen darin,
daß man das Sulfurylchlorid mit dem Ausgangsisomerengemisch in einem Molverhältnis von mindestens 2:1 umsetzt;
daß man die Umsetzung bei Temperaturen zwischen 20°C und 95°C durchführt;
daß man die Umsetzung in Gegenwart eines Lösemittels durchführt, wobei als Lösemittel Sulfurylchlorid im Überschuß oder übliche aliphatische oder aromatische Lösemittel, wie z.B. Kohlenwasserstoffe oder aprotische Lösemittel, eingesetzt werden; und
daß man nach erfolgter Umsetzung, als Nebenprodukt gebildetes 9-Dichlor-9-phosphonia-bicyclononylchlorid durch Zugabe einer äquivalenten Menge Wasser zum entsprechenden Oxychlorid hydrolysiert.

Beispiel

26 g (0,18 Mol) 9-H-9-Phosphabicyclononan (Isomerengemisch) wurden in 100 ml Toluol gelöst und auf 80°C erwärmt. Dazu tropfte man innerhalb von 30 Min. 60 g (0,4 Mol) $SO_2Cl_2$, wobei die Temperatur der Mischung auf 90°C anstieg. Aus der abgekühlten Reaktionsmischung schied sich ein Feststoff ab, ($[C_8H_{14}PCl_2^+]Cl^{\ominus}$, δ P = 133 ppm in $CHCl_3$) der durch Zugabe von $CHCl_3$ in Lösung gebracht wurde. Der Anteil an Phosphoniumsalz wurde $^{31}P$-NMR-spektroskopisch auf 20 Mol% bestimmt. Durch Zugabe von 0,65 g Wasser (36 Mol) in die siedende Reaktionsmischung wurde das Phosphoniumsalz vollständig in das Oxychlorid überführt. Das nach Abziehen der Leichtsieder im Vakuum erhaltene Rohprodukt wurde aus Hexan/Toluol 3 : 1 umkristallisiert.
Ausbeute: 29 g (84 % d. Th.)
Reinheit: > 97 %
δ P = 91,3 ppm [4.2.1]-Isomer, 34 %
δ P = 74,8 ppm [3.3.1]-Isomer, 66 %

## Patentansprüche

1. Verfahren zur Herstellung eines Isomerengemisches bestehend aus 9-Chlor-9-oxo-9-phosphabicyclo-[3.3.1]-nonan und 9-Chlor-9-oxo-9-phosphabicyclo-[4.2.1]-nonan, dadurch gekennzeichnet, daß man ein Isomerengemisch bestehend aus 9-H-9-Phosphabicyclo-[3.3.1]- und -[4.2.1]-nonan mit Sulfurylchlorid umsetzt.

2. Verfahren nach Anspruch 1, dadurch gekennzeichnet, daß man das Sulfurylchlorid mit dem Ausgangsisomerengemisch in einem Molverhältnis von mindestens 2 : 1 umsetzt.

3. Verfahren nach Anspruch 1 oder 2, dadurch gekennzeichnet, daß man die Umsetzung bei Temperaturen zwischen 20 und 95°C durchführt.

4. Verfahren nach einem der Ansprüche 1 bis 3, dadurch gekennzeichnet, daß man die Umsetzung in Gegenwart eines Lösemittels durchführt.

5. Verfahren nach Anspruch 4, dadurch gekennzeichnet, daß man als Lösemittel Sulfurylchlorid im Überschuß oder übliche aliphatische oder aromatische Lösemittel einsetzt.

6. Verfahren nach einem der Ansprüche 1 bis 5, dadurch gekennzeichnet, daß man nach erfolgter Umsetzung als Nebenprodukt gebildetes 9-Dichlor-9-phosphonia-bicyclononylchlorid durch Zugabe einer äquivalenten Menge Wasser zum entsprechenden Oxychlorid hydrolysiert.

## Claims

1. A process for the preparation of an isomer mixture composed of 9-chloro-9-oxo-9-phosphabicyclo-[3.3.1]-nonane and 9-chloro-9-oxo-9-phosphabicyclo-[4.2.1]-nonane, which comprises reacting an isomer mixture composed of 9-H-9-phosphabicyclo-[3.3.1]- and [4.2.1]-nonane with sulfuryl chloride.

2. The process as claimed in claim 1, wherein the sulfuryl chloride is reacted with the starting isomer mixture in a molar ratio of at least 2 : 1.

3. The process as claimed in claim 1 or 2, wherein the reaction is carried out at temperatures of between 20 and 95°C.

4. The process as claimed in any one of claims 1 to 3, wherein the reaction is carried out in the presence of a solvent.

5. The process as claimed in claim 4, wherein the solvent used is sulfuryl chloride in excess or customary aliphatic or aromatic solvents.

6. The process as claimed in any one of claims 1 to 5, wherein after the reaction has ceased, the 9-dichloro-9-phosphonia-bicyclo-nonyl chloride which has been formed as by-product is hydrolyzed to the corresponding oxychloride by adding an equivalent amount of water.

## Revendications

1. Procédé pour la fabrication d'un mélange d'isomères consistant en 9-chloro-9-oxo-9-phosphabicyclo-[3.3.1.]-nonane et en 9-chloro-9-oxo-9-phosphabicyclo-[4.2.1.]-nonane, caractérisé en ce que l'on fait réagir un mélange d'isomères consistant en 9H-9-phosphabicyclo-[3.3.1]-nonane et en 9H-9-phosphabicyclo-[4.2.1.]-nonane avec le chlorure de sulfuryle.

2. Procédé selon la revendication 1, caractérisé en ce que l'on fait réagir le chlorure de sulfuryle avec le mélange d'isomères de départ dans un rapport molaire d'au moins 2:1.

3. Procédé selon la revendication 1 ou 2, caractérisé en ce que l'on effectue la réaction à des températures comprises entre 20°C et 95°C.

4. Procédé selon l'une des revendications 1 à 3, caractérisé en ce que l'on effectue la réaction en présence d'un solvant.

5. Procédé selon la revendication 4, caractérisé en ce que l'on utilise comme solvant le chlorure de sulfuryle en excès ou des solvants aliphatiques ou aromatiques habituels.

6. Procédé selon l'une des revendications 1 à 5, caractérisé en ce que l'on hydrolyse après la réaction le chlorure de 9,9-dichloro-9-phosphonia-bicyclononyle formé comme sous-produit en l'oxychlorure correspondant par addition d'une quantité d'eau équivalente.